Europäisches Patentamt

European Patent Office

Office européen des brevets

(19)

(11) Publication number: **0 005 322**
**B1**

(12) **EUROPEAN PATENT SPECIFICATION**

(45) Date of publication of patent specification: **02.06.82**

(21) Application number: **79300564.6**

(22) Date of filing: **05.04.79**

(51) Int. Cl.³: **F 16 H 57/02,**
**F 16 H 19/04, B 21 D 51/16**
**//B62D3/12**

(54) Rack and pinion gears, housings therefor and a method of manufacturing such housings.

(30) Priority: **08.05.78 GB 1816278**

(43) Date of publication of application:
**14.11.79 Bulletin 79/23**

(45) Publication of the grant of the patent:
**02.06.82 Bulletin 82/22**

(84) Designated Contracting States:
**DE FR GB IT NL SE**

(56) References cited:
**DE - A - 2 409 938**
**DE - A - 2 720 813**
**DE - B - 1 915 219**
**DE - U - 7 217 049**
**DE - U - 7 739 063**
**US - A - 3 834 247**
**US - A - 3 845 669**

(73) Proprietor: **CAM GEARS Limited**
**45, Wilbury Way Hitchin**
**Hertfordshire SG4 0TU (GB)**

(72) Inventor: **Whitney, John**
**3 Stuart Street**
**Aberdare Mid-Glamorgan (GB)**

(74) Representative: **Walters, Frederick James et al,**
**Urquhart-Dykes & Lord 47 Marylebone Lane**
**London W1M 6DL (GB)**

(56) References cited:
BETRIEBSHÜTTE, 5th edition, Volume 1, 1957,
Verlag von Wilhelm Ernst & Sohn,
Berlin,
*pages 216, 222, 223 and 235*

WERKSTATTBÜCHER "Die neueren
Schweißverfahren", Volume 13, 7th edition,
1950. Springer-Verlag, Berlin-Göttingen-
Heidelberg
*page 34, fig. 37 and 39*

Rack and pinion gears, housings therefor and
a method of manufacturing such housings

This invention relates to rack and pinion gears, to housings therefor and to a method of manufacturing such housing.

Conventional rack and pinion gears are well known as comprising a housing; a rack bar in the housing which is longitudinally displaceable relative thereto, and a pinion rotatably mounted in the housing and having its teeth engaging with the teeth of a rack carried by the rack bar so that upon rotation of the pinion the rack bar is displaced longitudinally through the housing.

Gear assemblies of the kind discussed above are widely utilised in the art of vehicle steering, and ever increasing attempts are being made to reduce the cost of manufacture of such gears without detracting from their performance or reliability. An appreciable proportion of the cost of the gear can be attributed to the cost of manufacture of the housing — especially with conventional housings formed by machined castings or mouldings. To alleviate the high cost of housing manufacture it has hitherto been proposed, for example in our U.K. Specification No. 1,422,122, to form the housing as an assembly of two or more pre-formed shell-like components which are assembled around the gear components and secured together to constitute a unitary housing. German Gebrauchsmuster No. 7217049 also discloses a rack and pinion gear in which the housing is an assembly, in this latter case, of two tubular members secured together with one carrying the rack bar and the other the pinion so that the rack and pinion communicate through co-operating apertures in the tubular members.

An object of the present invention is to provide a novel structure of housing for a rack and pinion gear by which the housing is an assembly comprising sheet material which is susceptible to relatively inexpensive manufacture to include provision for the location of a component part of the gear other than the rack bar and pinion.

According to the present invention there is provided a housing for a rack and pinion gear comprising a first tubular member for receiving a rack bar carrying the rack and a second tubular member for receiving the pinion, each of said tubular members having an aperture in its side wall, and said tubular members being mated and secured one with the other with the apertures communicating with each other to provide an opening within the housing through which the rack and pinion are intended to co-operate, characterised in that at least one of the tubular members is formed from sheet material shaped and secured in tubular form; at least one of the tubular members which is formed from sheet material has a lateral projection or extension formed in its side wall by shaping said sheet material and said projection or extension forms a chamber communicating with the bore of that tubular member for receiving a component part associated with the rack and pinion gear.

Further according to the present invention there is provided a method of manufacturing a housing for a rack and pinion gear which comprises providing a first tubular member with an aperture in its side wall, that first member being intended to receive a rack bar carrying the rack, providing a second tubular member with an aperture in its side wall, that second member being intended to receive the pinion; mating said tubular members one with the other and with the apertures communicating with each other to provide an opening within the housing through which the rack and pinion are intended to co-operate, and securing the mated tubular members one to the other, characterised by shaping at least one of the first tubular member and the second tubular member from sheet material and securing the sheet material in tubular form and shaping the sheet material during the manufacture of at least one said tubular member therefrom to form in the side wall of that member a lateral projection or extension which forms a chamber communicating with the bore of that tubular member for receiving a component part associated with the rack and pinion gear.

The invention also provides a rack and pinion gear characterised by a housing specified as being in accordance with the present invention, and in which the rack bar of the gear is received in the first tubular member relative to which it is longitudinally displaceable; the pinion is rotatably mounted within the second tubular member; the pinion engages with the rack of the rack bar through the opening in the housing provided by the communicating apertures, and a component part of the gear is received within the chamber formed by the lateral projection or extension on at least one of the tubular members.

The tubular members can be of any desired cross sectional shape and are not necessarily of the same cross sectional shape, for example in a preferred embodiment the first tubular member is of substantially triangular cross-section and the second tubular member is substantially circular section. Furthermore, the tubular members can be made in various and not necessarily the same, materials, although it is envisaged that they will usually be made in an engineering plastics material (which material is discussed together with examples in our Specification No. 1,422,122) or in an appropriate metal. The tubular members can be secured together in a desired angular relationship by use of an adhesive, a bonding agent, welding techniques or otherwise as is appropriate for the particular materials employed.

A tubular member which does not have a lateral projection or extension formed in its side wall can be formed by conventional means such as extrusion or drawing techniques and thereafter the aperture in its side wall can be formed by cutting or otherwise to provide the appropriate mating relationship between the tubular members. Preferably however each of the tubular members is formed from sheet material which is rolled or otherwise shaped into the appropriate tubular form and thereafter welded or otherwise secured along one or more seams of the tube. By this latter technique of tube formation the sheet can be cut to size as appropriate and also provided with one or more apertures or recesses which are so located and shaped that the desired aperture is provided in the tubular member when formed from the sheet. By forming at least one tubular member from sheet material as aforementioned there can be provided in accordance with the present invention a tubular member with one or more lateral projections or extensions on its side wall which form one or more chambers communicating with the bore of the tube for the reception and/or location of component parts associated with the rack and pinion gear.

By way of example, in a conventional rack and pinion gear there is frequently provided a spring or resiliently located yoke or similar component which is located oppositely to the pinion on the side of the rack bar remote from the pinion and which serves to bias the rack bar to maintain its teeth in engagement with those of the pinion; such a yoke is usually mounted in a chamber formed by an extension of the housing and by forming the first tubular member by shaping sheet material such sheet can be profiled and cut as necessary so that in the forming of the tubular member a laterally extending projection can be erected on its side wall to define the chamber for reception of the yoke.

Desirably the apertures in the side walls of the tubular members are profiled to provide close mating engagement between those members when the apertures are in communication (so that the appearance of the housing is that of two tubes partially intersecting each other). It will be realised however that it is not essential for the peripheral edges of the two apertures to coincide with each other provided that the opening which is formed between the tubular members enables cooperation to be maintained between the rack and pinion teeth of the assembled gear. Furthermore, fairly wide mating tolerances may be permissible between the two tubular members (particularly, if, for example, those members are to be welded or brazed together with a filler material) provided that the desired angular relationship, orientation and other positioning of those two tubular members is maintained (for example, by mounting the tubular members in a jig) whilst they are being secured together.

The pinion will usually be mounted within the second tubular member in bearings and that tubular member can be shaped, for example by nipping, pressing or otherwise to provide seatings for such bearings (the latter usually being located one at each end of the second tubular member). It will also be usual for the rack bar to be longitudinally displaceable through the first tubular member while mounted in bearings and the wall of the second tubular member can also be appropriately shaped to provide seatings for such bearings.

One embodiment of a housing constructed in accordance with the present invention will now be described, by way of example only, with reference to the accompanying drawings in which:—

Figure 1 is an end view of the housing;

Figure 2 illustrates a metal sheet from which the first tubular member in the housing of Figure 1 is shaped;

Figure 3 diagrammatically illustrates a perspective view of the first tubular member formed from the metal sheet in Figure 2;

Figure 4 illustrates a metal sheet from which the second tubular member in the housing of Figure 1 is shaped, and

Figure 5 is a side elevation of the housing in Figure 1 and in which the first tubular member is provided with an extension portion.

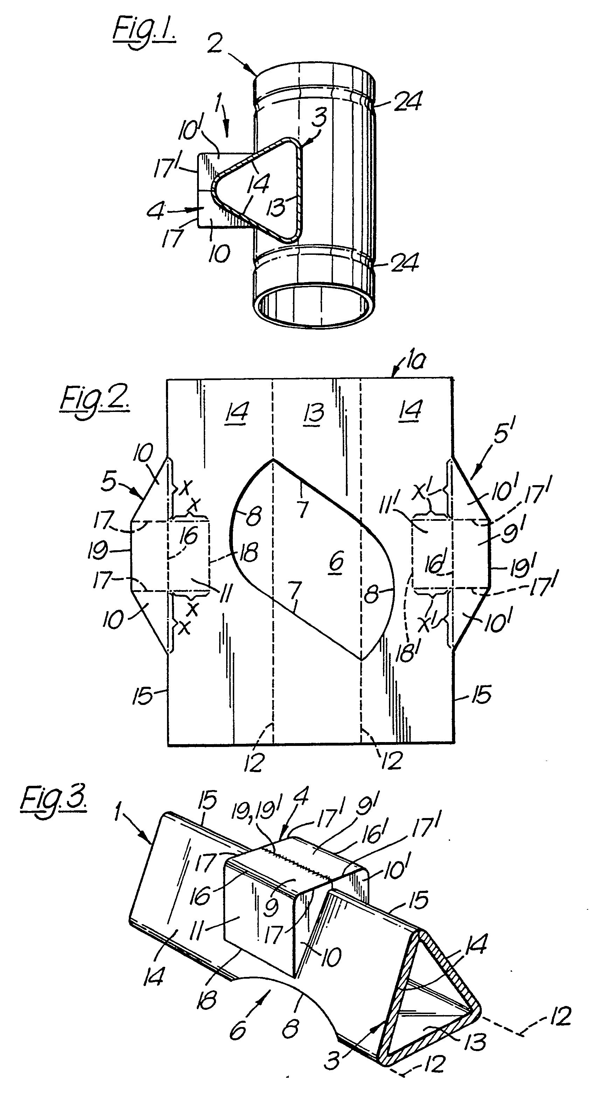

The housing in Figure 1 for a rack and pinion gear of the kind previously discussed comprises a first tubular member 1 which is secured by welding in mated relationship with a second tubular member 2.

The tubular member 1 has a tubular portion 3 of substantially triangular cross section and a laterally outwardly extending box-like projection 4 on the wall of the portion 3 which forms a yoke chamber opening into the bore of the tubular portion. The tubular portion 3 is intended to receive the rack bar (not shown) of the gear so that rack bar is displaceable longitudinally through the tube and tubular member 1 is intended to receive the pinion (not shown) of the gear so that the pinion is rotatably mounted in the bore of the member 2. The yoke chamber formed by the box-like projection 4 is intended to receive a yoke (not shown) for example of resilient material, which supports the rack bar with the teeth of its rack in engagement with those of the pinion.

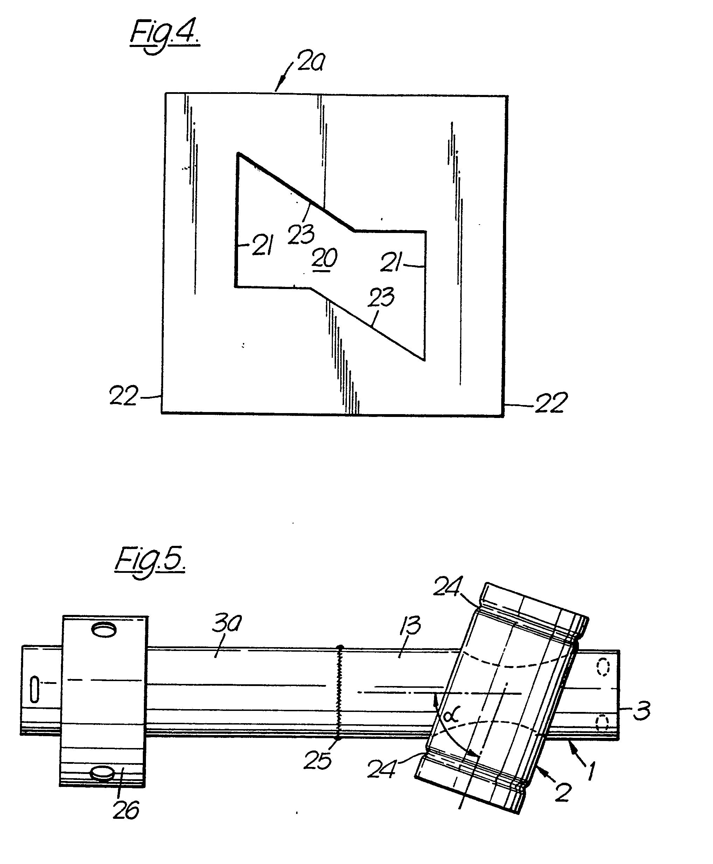

The tubular member 1 is formed from a steel sheet 1a (see Figure 2) which is of generally rectangular shape except for a pair of projections 5 and 5' extending from opposed side edges 15 of the sheet.

The tubular member 2 is of substantially circular cross section and is formed by rolling a substantially rectangular steel sheet 2a (see Figure 4).

Prior to forming the tubular member 1 an aperture 6 having parallel and opposed edge portions 7 connected by opposed concave edge portions 8 is cut into the sheet 1a. In addition the projections 5 and 5' (each of which is substantially in the shape of an isosceles trapezium) are cut or slit into "T" formations. The head of the "T" formation for projection 5 being provided by a central rectangular portion 9 and triangular ears 10 and the stem of that "T" being provided at 11 so that the sheet is cut along the lines indicated at x. Projection 5' is similarly cut at x' to provide the "T" formation, the head of which has a central rectangular portion 9' and a pair of ears 10' and the stem of which is shown at 11'. The tubular portion 3 is constructed from the sheet 1a by folding the sheet about longitudinally extending lines 12 so that the opposed edges 15 are in abutment and the tube has a base 13 and opposed side walls 14. The sheet 1a is retained in its tubular form by welding together the abutting edges 15 to form seams on the longitudinally opposed sides of the stems 11 and 11'. The box-like projection 4 is erected from the "T" formations by displacing those portions of the sheet from the planes of the respective side walls 14 and thereafter folding them about fold line 16, 17 and 18 (and also 16', 17' and 18') into the box-like shape as shown in Figure 3. Following erection of the projection 4, the abutting edges 19 and 19' are welded together to form a seam which is continuous with the seams 15 and the free edges of the triangular ears 10 and 10' are welded to the respectively adjacent edges of the stems 11 and 11' and of the side walls 14 to provide a rigid structure.

It will be seen from Figures 2 and 3 that the aperture 6 extends across the full width of the base 13 and part way into opposed side walls 14 so that the curved edge portions 8 of the aperture are located in the side walls 14.

The sheet 2a has an aperture 20 with opposed edge portions 21 which are parallel to opposed side edges 22 of the sheet. The edge portions 21 are joined by opposed dog-legged edge portions 23. The tubular member 2 is formed by rolling sheet 2a into cylindrical form where the edges 22 are in abutment and the cylindrical form is retained by welding a seam along the abutting side edges 22.

After their formation, the tubular members 1 and 2 are mated as shown in Figure 1 so that the member 1 sits in saddle-like manner on the member 2 with the apertures 6 and 20 communicating with each other. In particular the aperture 6 is shaped to mate with the tubular member 2 in substantially complementary relationship whereby the concave edge portions 8 follow the substantially circular or elliptical profile presented by the cylindrical surface of member 2 while the straight edge portions 7 extend adjacent and parallel to the edge portions 21. Desirably the peripheral edge of the aperture 6 coincides with the peripheral edge of the aperture 20. In this mated condition the tubular members 1 and 2 present the appearance of intersecting tubes and they are secured together as such by welding around the edges of the communicating apertures 6 and 20.

In a rack and pinion gear of the kind specified the axis of the pinion is usually off-set at an oblique angle to the longitudinal direction along which the rack bar is displaced to ensure that the rack and pinion teeth mate in correct manner. Consequently the tubular members 1 and 2 are arranged to mate at an angular relationship consistent with the desired angular relationship which is to be provided between the rack bar and the pinion, such typical relationship is indicated at $\alpha$ in Figure 5. To provide the correct angular relationship between the tubular members 1 and 2 the apertures 6 and 20 are appropriately obliquely off-set with respect to the longitudinal extending side edges 15 and 22 of the respective sheets 1a and 2a (this is particularly evident from the aperture 6 in the Figure 2).

After the housing in Figure 1 has been formed by welding together the tubular members 1 and 2 any burrs or flashes are removed from the inside of the housing and the rack and pinion gear can be assembled. To assemble the gear the pinion is inserted into the bore of the member 2 and rotatably mounted in bearings (not shown) within the member 2. Seatings can be provided for such bearings at opposite ends of the tubular member 2 by nipping or otherwise shaping those ends to form annular inwardly directed ribs 24 which serve to locate the bearings. The pinion and its bearings are enclosed within the member 2 by appropriate end caps (not shown) through one of which a shaft from the pinion projects for coupling to a steering column.

After insertion of a yoke (not shown) into the yoke chamber formed by the projection 4, the rack bar can be fed into the tubular portion 3 so that its rack is engaged with the pinion. Such engagement of the rack and pinion teeth is effected through the opening which is provided within the housing by the communicating apertures 6 and 20 and it will be realised that the shape and configuration of this opening should permit such engagement to be maintained throughout the operative stroke of the rack bar.

It is frequently necessary, particularly in vehicle steering assemblies which include rack and pinion gears of the kind discussed, for the rack bar to be enclosed by the housing for the whole or a major part of its longitudinal extent. If required therefore the tubular portion 3 of the housing can be extended by a tubular portion 3a which is of complementary size and cross sectional shape to the portion 3 and is butt welded to an end of the portion 3 as indicated at 25 in Figure 5. The extension portion 3a can be formed from a steel sheet similarly to the portion 3 and is conveniently provided with a bracket 26 for mounting the gear.

If required the tubular portion 3 can be nipped or otherwise shaped to provide one or more seats (for example similarly to the shapings 24 for the tubular member 2) to locate bearing means by which the rack bar is displaceably supported in the tubular member 1.

## Claims

1. A housing for a rack and pinion gear comprising a first tubular member (1) for receiving a rack bar carrying the rack and a second tubular member (2) for receiving the pinion, each of said tubular members (1, 2) having an aperture (6, 20) in its side wall, and said tubular members being mated and secured one with the other with the apertures (6, 20) communicating with each other to provide an opening within the housing through which the rack and pinion are intended to co-operate, characterised in that at least one of the tubular members is formed from sheet material (1a, 2a) shaped and secured in tubular form; at least one of the tubular members (1, 2) which is formed from sheet material (1a, 2a) has a lateral projection or extension (4) formed in its side wall by shaping said sheet material and said projection or extension (4) forms a chamber communicating with the bore of that tubular member for receiving a component part associated with the rack and pinion gear.

2. A housing as claimed in Claim 1 characterised in that the lateral projection or extension (4) is provided in the side wall of the first tubular member (1) and provides a chamber for receiving bearing means by which the rack bar is to be supported in the first tubular member.

3. A housing as claimed in Claim 2 characterised in that the lateral projection or extension (4) is located in the side wall of the first tubular member (1) so that the chamber provided thereby is located substantially laterally opposite to the opening through which the rack and pinion are intended to co-operate and said chamber is for receiving bearing means for biasing the rack bar into engagement with the pinion.

4. A housing as claimed in any one of the preceding Claims characterised in that the second tubular member (2) has in its side wall seatings (24) for bearing means by which the pinion is to be rotatably mounted in the housing.

5. A housing as claimed in any one of the preceding Claims characterised in that the first tubular member (1) is of substantially triangular cross-section.

6. A housing as claimed in Claim 5 characterised in that the first tubular member (1) has a box-like lateral projection or extension (4) formed in its side wall.

7. A housing as claimed in any one of the preceding Claims characterised in that the second tubular member (2) is of substantially circular cross-section.

8. A method of manufacturing a housing for a rack and pinion gear which comprises providing a first tubular member (1) with an aperture (6) in its side wall, the first member (1) being intended to receive a rack bar carrying the rack; providing a second tubular member (2) with an aperture (20) in its side wall, that second member (2) being intended to receive the pinion; mating said tubular members (1, 2) one with the other and with the apertures (6, 20) communicating with each other to provide an opening within the housing through which the rack and pinion are intended to co-operate, and securing the mated tubular members (1, 2) one to the other, characterised by shaping at least one of the first tubular member (1) and the second tubular member (2) from sheet material (1a, 2a) and securing the sheet material in tubular form and shaping the sheet material (1a, 2a) during the manufacture of at least one said tubular member therefrom to form in the side wall of that member (1, 2) a lateral projection or extension (4) which forms a chamber communicating with the bore of that tubular member for receiving a component part associated with the rack and pinion gear.

9. A method as claimed in Claim 8 characterised by forming the aperture or apertures (6, 20) in the sheet material (1a, 2a) prior to shaping said material into its tubular form.

10. A method as claimed in either Claim 8 or Claim 9 characterised by forming the first tubular member (1) by shaping from sheet material (1a) and erecting from said sheet material during said shaping a box-like projection (4) for the reception of bearing means by which the rack bar is to be supported in that tubular member (1).

11. A rack and pinion gear characterised by a housing as claimed in any one of Claims 1 to 7 or manufactured by the method as claimed in any one of Claims 8 to 10 and in which the rack bar of the gear is received in the first tubular member (1) relative to which it is longitudinally displaceable; the pinion is rotatably mounted within the second tubular member (2); the pinion engages with the rack of the rack bar through the opening in the housing provided by the communicating apertures (6, 20), and a component part of the gear is received within the chamber formed by the lateral projection or extension (4) on at least one of the tubular members.

## Revendications

1. Carter pour engrenage à pignon et crémaillère comprenant un premier élément tubulaire (1) destiné à recevoir une barre de crémaillère portant la crémaillère, et un second élément tubulaire (2) destiné à recevoir le pignon, chacun de ces éléments tubulaires (1, 2) comportant une ouverture (6, 20) dans sa paroi latérale et ces éléments tubulaires s'adaptant et se fixant l'un à l'autre de façon que les ouvertures (6, 20) communiquent pour former, à l'intérieur du carter, une ouverture par laquelle la crémaillère et le pignon sont destinés à coopérer, carter caractérisé en ce que l'un au moins des éléments tubulaires est formé à partir d'un matériau en feuille (1a, 2a) mis en forme et fixé sous forme tubulaire; et en ce que l'un au moins des éléments tubulaires (1, 2), formé à partir du matériau en feuille (1a, 2a) comporte une projection ou extension latérale (4) obtenue dans sa paroi latérale par mise en forme de matériau en feuille, cette projection ou extension (4) formant une chambre communicant avec le trou de l'élément tubulaire de manière à recevoir une partie élémentaire associée à l'engrenage à pignon et crémaillère.

2. Carter selon la revendication 1, caractérisé en ce que la projection ou extension latérale (4) est prévue dans la paroi latérale du premier élément tubulaire (1) et constitue une chambre destinée à recevoir des moyens de support de la barre de crémaillère dans le premier élément tubulaire.

3. Carter selon la revendication 2, caractérisé en ce que la projection ou extension latérale (4) est située dans la paroi latérale du premier élément tubulaire (1) de façon que la chambre ainsi formée soit située sensiblement latéralement en face de l'ouverture par laquelle la crémaillère et le pignon sont destinés à coopérer, cette chambre étant destinée à recevoir des moyens de support permettant de pousser la barre de crémaillère en prise avec le pignon.

4. Carter selon l'une quelconque des revendications précédentes, caractérisé en ce que le second élément tubulaire (2) comporte dans sa paroi latérale des sièges (24) destinés à recevoir les moyens de support permettant de monter le pignon en rotation dans le carter.

5. Carter selon l'une quelconque des revendications précédentes, caractérisé en ce que le premier élément tubulaire (1) est à section sensiblement triangulaire.

6. Carter selon la revendication 5, caractérisé en ce que le premier élément tubulaire (1) comporte une projection ou extension latérale en forme de boite (4) constituée dans sa paroi latérale.

7. Carter selon l'une quelconque des revendications précédentes, caractérisé en ce que le second élément tubulaire (2) est à section sensiblement circulaire.

8. Procédé de fabrication d'un carter pour engrenage à pignon et crémaillère consistant à utiliser un premier élément tubulaire (1) muni d'une ouverture (6) dans sa paroi latérale, ce premier élément (1) étant destiné à recevoir une barre de crémaillère portant la crémaillère, à utiliser un second élément tubulaire (2) muni d'une ouverture (20) dans sa paroi latérale, ce second élément (2) étant destiné à recevoir le pignon; à adapter les éléments tubulaires (1, 2) l'un à l'autre et aux ouvertures (6, 20) communicantes, de manière à former dans le carter une ouverture par laquelle la crémaillère et le pignon sont destinés à coopérer; et à fixer ensemble les éléments tubulaires (1, 2) s'adaptant l'un à l'autre, procédé caractérisé en ce qu'il consiste à mettre en forme l'un au moins des premier et second éléments tubulaires (1) et (2) à partir d'un matériau en feuille (1a, 2a), à fixer le matériau en feuille sous forme tubulaire, et à mettre en forme le matériau en feuille (1a, 2a) pendant la fabrication de l'un au moins des éléments tubulaires à partir de cette feuille, de manière à former dans la paroi latérale de cet élément (1, 2), une projection ou extension latérale (4) constituant une chambre communicant avec le trou de l'élément tubulaire pour recevoir une partie élémentaire associée à l'engrenage à pignon et crémaillère.

9. Procédé selon la revendication 8, caractérisé en ce qu'il consiste à former l'ouverture ou les ouvertures (6, 20) dans le matériau en feuille (1a, 2a), avant de mettre ce matériau dans sa forme tubulaire.

10. Procédé selon l'une quelconque des revendications 8 et 9, caractérisé en ce qu'il consiste à réaliser le premier élément tubulaire (1) en le mettant en forme à partir du matériau en feuille (1a), et à construire, pendant la mise en forme de ce matériau en feuille, une projection en forme de boite (4) destinée à recevoir des moyens de coussinets permettant de monter la barre de crémaillère dans l'élément tubulaire (1).

11. Engrenage à pignon et crémaillère caractérisé par un carter selon l'une quelconque des revendications 1 à 7, ou fabriqué par le procédé selon l'une quelconque des revendications 8 à 10; engrenage dans lequel la barre de crémaillère se loge dans le premier élément tubulaire (1) par rapport auquel elle peut se déplacer longitudinalement; le pignon est monté en rotation dans le second élément tubulaire (2); le pignon vient en prise avec la crémaillère de la barre de crémaillère par l'ouverture du carter formée par les ouvertures communicantes (6, 20); et une partie élémentaire de l'engrenage se loge dans la chambre constituée par la projection ou extension latérale (4) formée sur l'un au moins des éléments tubulaires.

**Patentansprüche**

1. Gehäuse für ein Zahnstangengetriebe, bestehend aus einem ersten rohrförmigen Teil (1) zur Aufnahme einer Zahnstange und einem zweiten rohrförmigen Teil (2) zur Aufnahme eines Ritzels, wobei jedes rohrförmige Teil in seiner Seitenwandung eine Öffnung (6, 20) aufweist und die beiden Teile einander mit ihren Öffnungen kommunizierend derart zugeordnet und miteinander verbunden sind, daß innerhalb des Gehäuses eine den Eingriff von Zahnstange und Ritzel ermöglichende Öffnung gebildet ist, dadurch gekennzeichnet, daß mindestens eines der rohrförmigen Teile (1, 2) aus einem plattenförmigen Rohling (1a, 2a) geformt ist, daß mindestens eines der aus dem plattenförmigen Rohling gebildeten rohrförmigen Teile einen angeformten Ansatz oder Verlängerungsstück (4) in seiner Seitenwandung aufweist, und daß dieser Ansatz (4) eine Kammer bildet, die mit der Öffnung (6, 20) des zugeordneten rohrförmigen Teils zur Aufnahme eines dem Zahnstangengetriebe zugeordneten Bauteils verbunden ist.

2. Gehäuse nach Anspruch 1, dadurch gekennzeichnet, daß der Ansatz (4) in der Seitenwandung der ersten rohrförmigen Teils (1) vorgesehen ist und eine Kammer zur Aufnahme von Lagerelementen bildet, über die die Zahnstange im ersten rohrförmigen Teil gelagert ist.

3. Gehäuse nach Anspruch 2, dadurch gekennzeichnet, daß der Ansatz (4) in der Seitenwandung des ersten rohrförmigen Teils (1) angeordnet ist, daß die derart gebildete Kammer im wesentlichen der Öffnung (6, 20), über die die Zahnstange und das Ritzel zusammenwirken, rechtwinklig zugeordnet ist, und daß die Kammer Lagermittel aufnimmt, über die die Zahnstange mit dem Ritzel unter Vorspannung in Eingriff gehalten ist.

4. Gehäuse nach einem der vorhergehenden Ansprüche, dadurch gekennzeichnet, daß das zweite rohrförmige Teil (2) in seiner Seitenwandung Auflageflächen (24) für das Ritzel im Gehäuse drehbar lagernde Lagerelemente aufweist.

5. Gehäuse nach einem der vorhergehenden Ansprüche, dadurch gekennzeichnet, daß das erste rohrförmige Teil (1) im wesentlichen einen dreieckförmigen Querschnitt aufweist.

6. Gehäuse nach Anspruch 5, dadurch gekennzeichnet, daß das erste rohrförmige Teil (1) in seiner Seitenwandung einen zu seiner Längsachse senkrecht stehenden, kastenförmigen Ansatz oder Verlängerungsstück (4) aufweist.

7. Gehäuse nach einem der vorhergehenden Ansprüche, dadurch gekennzeichnet, daß das zweite rohrförmige Teil (2) einen im wesentlichen kreisförmigen Querschnitt aufweist.

8. Verfahren zur Herstellung eines Gehäuses für einen Zahnstangentrieb, bestehend aus einem ersten, eine Öffnung (6) in seiner Seitenwandung aufweisenden, rohrförmigen Teil (1) zur Aufnahme der mit dem Ritzel zusammenwirkenden Zahnstange, einem zweiten, eine Öffnung in seiner Seitenwandung aufweisenden, rohrförmigen Teil (2) zur Aufnahme des Ritzels, wobei beide Teile einander mit ihren Öffnungen kommunizierend derart zusammengesetzt und aneinander befestigt werden, daß innerhalb des Gehäuses eine den Eingriff von Zahnstange und Ritzel ermöglichende Öffnung entsteht, dadurch gekennzeichnet, daß mindestens eines der rohrförmigen Teile (1, 2) aus einem plattenförmigen Rohling (1a, 2a) geformt wird, daß die Rohlinge in der gewünschten Form zusammengefügt werden, daß bei mindestens einem der rohrförmigen Teile während des Formvorganges senkrecht zur Längsmittelachse in einer Seitenwandung ein Ansatz oder Verlängerungsstück (4) angeformt wird, das eine mit der Öffnung im jeweils anderen rohrförmigen Teil kommunizierende, ein dem Zahnstangentrieb zugeordnetes Bauteil aufnehmende Kammer bildet.

9. Verfahren nach Anspruch 8, dadurch gekennzeichnet, daß die Öffnung bzw. die Öffnungen (6, 20) in den plattenförmigen Rohling (1a, 2a) vor seinem Formvorgang geformt werden.

10. Verfahren nach den Ansprüchen 8 und 9, dadurch gekennzeichnet, daß das erste rohrförmige Teil (1) aus einem plattenförmigen Rohling (1a) geformt wird, daß während des Formvorganges aus dem Rohling ein kastenförmiger Ansatz (4) ausgeschnitten und aufgebogen wird, der Elemente zur Lagerung der Zahnstange im ersten rohrförmigen Teil (1) aufnimmt.

11. Zahnstangengetriebe mit einem Gehäuse nach den Ansprüchen 1 bis 7 oder das nach dem Verfahren gemäß den Ansprüchen 8 bis 10 hergestellt ist und bei dem die Zahnstange des Getriebes im ersten rohrförmigen Teil (1) längsverschieblich angeordnet ist, dadurch gekennzeichnet, daß das Ritzel im zweiten rohrförmigen Teil (2) drehbeweglich gelagert ist, daß das Ritzel in die Zahnstange durch die im Gehäuse mittels der miteinander kommunizierenden Öffnungen gebildete Gehäuseöffnung (6, 20) hindurch eingreift, und daß ein dem Getriebe zugeordnetes Bauteil in der durch den seitlichen Ansatz oder Verlängerungsstück (4) an mindestens einem der rohrförmigen Teile gebildeten Kammer vorgesehen ist.

Fig. I.

0 005 322

Fig. 2.

Fig. 3.

_Fig.4._

_Fig.5._